# EUROPÄISCHE PATENTSCHRIFT

(11) **EP 2 549 257 B1**
(45) Veröffentlichungstag und Bekanntmachung des Hinweises auf die Patenterteilung: **30.10.2013**
(21) Anmeldenummer: 11174330.8
(22) Anmeldetag: 18.07.2011
(51) Int. Cl.: G01M 13/02

(54) **Verfahren zur Schadenserkennung an Getrieben**
Method for detecting damage to drives
Procédé de détection de dommages sur des engrenages

(43) Veröffentlichungstag der Anmeldung: 23.01.2013
(73) Patentinhaber: Siemens Aktiengesellschaft, 80333 München (DE)
(72) Erfinder: Reimers, Jan-Dirk, 52074 Aachen (DE); Klein-Hitpass, Arno, 52074 Aachen (DE)

(56) Entgegenhaltungen:
- EP-A2- 0 889 314
- DE-A1- 19 757 317
- US-A- 4 872 337
- VON CJ CRAPTREE ET AL.: "Detecting Incipient Wind Turbine Gearbox Failure: The Signal Analysis Method for On-Line Condition Monitoring", EUROPEAN WIND ENERGY CONFERENCE, 2010, XP002664789,

## Beschreibung

Die Erfindung betrifft ein Verfahren zur Schadenserkennung bei verzahnten Getriebestufen mit wenigstens einem Paar von miteinander in Eingriff stehenden Zahnrädern, bei dem durch wenigstens einen Schwingungssensor Schwingungssignale erfasst werden, die zu den im Betrieb der Getriebestufe auftretenden Schwingungen korrespondieren, und die erfassten Schwingungssignale analysiert werden, um mögliche Schäden zu erkennen. Des Weiteren betrifft die Erfindung eine Vorrichtung zur Schadenserkennung an verzahnten Getriebestufen.

In zahlreichen Maschinen im industriellen Bereich stellen Getriebe zentrale Bauteile dar. Diese unterliegen im Betrieb einer starken Beanspruchung und damit verbundenen Abnutzungen, wobei es zu Schäden kommen kann, die eine verschlechterte Funktionsweise und insbesondere Ausfälle des Getriebes und der gesamten Maschine zur Folge haben können. Um derartige schadensbedingte Ausfälle und die damit einhergehenden finanziellen Einbußen zu minimieren bzw. zu verhindern, wird darauf abgezielt, die Funktionsweise des Getriebes zu beobachten. In diesem Zusammenhang werden Zustandsüberwachungssysteme (Condition Monitoring Systems - CMS) eingesetzt, mit denen im laufenden Betrieb überwacht werden kann, ob ein Bauteil, beispielsweise ein Getriebe, ordnungsgemäß arbeitet oder aber eine Fehlfunktion vorliegt bzw. sich eine solche entwickelt. Das Auftreten bzw. Bevorstehen eines Schadens kann auf diese Weise frühzeitig erkannt werden, so dass geeignete Maßnahmen eingeleitet werden können, um den Schaden lokal zu begrenzen bzw. zeitnah und effizient zu beheben. In der Folge können durch die frühzeitige Schadenserkennung Betriebseinschränkungen bzw. Stillstandzeiten der Maschine gering gehalten werden.

Aktuell gewinnen derartige Zustandsüberwachungssysteme insbesondere im Kontext der Energieerzeugung durch Windkraft an Bedeutung, da der dauerhafte zuverlässige Betrieb der Windkraftanlage zur kontinuierlichen Stromversorgung gewährleistet sein muss und Voraussetzung für einen wirtschaftlichen Betrieb der Anlage ist. Besonderes Augenmerk liegt hier auf der Zustandsüberwachung des Getriebes, da das Getriebe der Windkraftanlage die höchsten Ausfallzeiten pro Schadensfall unter den Bauteilen der Windkraftanlagen zeigt. Die lange Ausfallzeit ist dabei durch komplexe Reparaturprozedere und eine mitunter schlechte Erreichbarkeit der geschädigten Komponenten bedingt.

Ein Zustandsüberwachungs- bzw. Zustandsdiagnosesystem, wie es im Bereich der Windkraft Verwendung findet, umfasst im Allgemeinen eine Temperaturüberwachung der Anlage, eine Zustandsüberwachung des in der Anlage eingesetzten Öls und eine Schwingungsüberwachung. Bei Letzterer werden die mit dem Betrieb eines Bauteils einhergehenden Schwingungen mittels geeigneter Schwingungssensoren überwacht, um so Abweichungen vom Normalbetrieb der Windkraftanlage bzw. deren Komponenten detektieren zu können, die auf einen vorliegenden Schaden hinweisen. Auch die aktuellen Betriebsparameter wie beispielsweise die Drehzahl oder die Last werden überwacht und aufgezeichnet.

Die Zustandsüberwachung erfolgt bei den bekannten Verfahren im Allgemeinen über einen längeren Zeitraum. Zur Schadenserkennung werden die erfassten Signale mit Referenzwerten verglichen, die im Rahmen einer Kalibriermessung erfasst oder mit Hilfe von Simulationsmethoden erhalten worden sind. Es kann eine Katalogisierung von Schwingungssignaturen erfolgen, die bei Vorliegen eines Schadens erfasst wurden und die dann für den Vergleich mit zukünftig zu erfassenden Schwingungssignaturen zur Verfügung stehen. Eine zuverlässige Schadensprognose durch Vergleich kann dabei nur erfolgen, wenn identische Betriebsparameter bei der Erfassung der katalogisierten Schwingungssignaturen und den Schwingungssignaturen mit denen diese verglichen werden, vorgeherrscht haben.

Infolge der deutlich variierenden Windgeschwindigkeiten unterliegt eine Windkraftanlage jedoch einem breiten Lastspektrum, und die betriebsbedingten Parameter erstrecken sich über einen weiten Bereich. Daher ist es im Allgemeinen nicht oder nur mit hohem Aufwand möglich, zu allen denkbaren Betriebszuständen des Systems Referenzwerte zu hinterlegen. Aus diesem Grund wird beispielsweise mit einer sogenannten Hüllkurventechnik gearbeitet. Dem Referenzsignal wird dabei jeweils ein minimaler und maximaler Wert zugeordnet, wodurch der Bereich der betriebsbedingten Abweichungen abgeschätzt und definiert wird. Eine Abweichung wird dann als schadensbedingt interpretiert, wenn das Signal außerhalb dieses Referenzfensters liegt. Dies ist jedoch mit Ungenauigkeiten verbunden, und für eine zuverlässige Schadenserkennung muss ein Experte herangezogen werden, welcher die erfassten Signale analysiert und aufgrund seiner Erfahrung mögliche Schäden identifizieren kann. Dies wird als nachteilig empfunden, da insbesondere aufgrund der Vielzahl von installierten Windkraftanlagen damit zu rechnen ist, dass nicht genügend Experten zur Verfügung stehen und darüber hinaus deren Heranziehung zur Schadenserkennung mit hohen Kosten verbunden ist.

Daher gehen die Bestrebungen dahin, die Analyse der im Rahmen der Zustandsüberwachung erfassten Daten hinsichtlich vorliegender Schäden zu verbessern. Dabei ist es für eine zuverlässige Schadensprognose insbesondere erforderlich, die Änderungen der erfassten Signale, die durch eine Variation der aktuellen Betriebsparameter verursacht werden, von den schadensbedingten Änderungen zu trennen.

Im Rahmen der Veröffentlichung "Detecting Incipient Wind Turbine Gearbox Failure: The Signal Analysis Method for On-Line Condition Monitoring" von CJ Craptree et al., European Wind Energy Conference 2010 (EWEC 2010) wird vorgeschlagen, die im Rahmen der Zustandsdiagnose erfassten Signale auf einen der Betriebsparameter, hier die Last zu normieren, wodurch die Zuverlässigkeit der Schadenserkennung verbessert werden soll. Darüber hinaus wird eine Analysemethode für die On-line Zustandsüberwachung vorgestellt, durch welche eintretende Getriebeschäden in einem frühen Stadium erkannt werden, indem mehrere unabhängige Signale, die im Rahmen der Zustandsüberwachung aufgezeichnet wurden, herangezogen und verglichen werden. Dabei werden für diesen Multi-Parameter-Ansatz insbesondere aufgezeichnete Getriebeschwingungen und der Ölzustand herangezogen.

Der vorliegenden Erfindung liegt die Aufgabe zugrunde, ein weiteres Verfahren zur Schadenserkennung anzugeben, welches eine zuverlässige Erkennung bzw. Vorhersage von Schäden an Getrieben ermöglicht, wobei die Schadenserkennung automatisiert erfolgen kann und welches kostengünstig angewendet werden kann.

Diese Aufgabe wird erfindungsgemäß dadurch gelöst, dass mittels des Schwingungssensors ein Schwingungssignal erfasst wird, welches zu den Schwingungen korrespondiert, die durch die Abwälz- und Stoßbewegung bei einem unter Last erfolgenden Zahneingriff des wenigstens einen Paares von Zahnrädern verursacht werden. Das Schwingungssignal wird mit einem Kalibrier-Schwingungssignal verglichen und aus der Abweichung des Schwingungssignals von dem Kalibrier- Schwingungssignal wird das auf das Getriebe einwirkende Drehmoment ermittelt. Anschließend wird das ermittelte Drehmoment bei der Auswertung des Schwingungssignals hinsichtlich möglicher Schäden berücksichtigt.

Die Erfindung baut auf der Erkenntnis auf, dass sich im Eingriff befindliche Zähne eines Zahnradpaares bei dem Anliegen einer Last verformen. Die Verformung hängt dabei gemäß der Hookeschen Regel für den linearen elastischen Fall von der anliegende Kraft und der Federkonstante des verformten Bauteils ab. Bei verzahnten Getriebestufen bestimmt demzufolge die Zahnsteifigkeit zusammen mit dem anliegenden Drehmoment, in welchem Maße eine Verformung der Zähne im Eingriff erfolgt. Dieser Zusammenhang wird erfindungsgemäß ausgenutzt, um das Drehmoment zu ermitteln.

Durch die lastbedingten Verformungen der im Eingriff befindlichen Zähne ändert sich der Verlauf des Zahneingriffs. Diese Änderungen können mittels Schwingungssensoren detektiert werden. Dazu wird an dem Getriebe ein Schwingungssignal erfasst, welches zu den Schwingungen korrespondiert, die durch die Abwälz- und Stoßbewegung bei dem unter Last erfolgenden Zahneingriff verursacht werden. Das erfasste Schwingungssignal wird dann mit einem Kalibrier-Schwingungssignal verglichen, und aus der Abweichung des Schwingungssignals von dem Kalibrier-Schwingungssignal wird das auf das Getriebe einwirkende Drehmoment bestimmt.

Wird der Zustand des Getriebes mittels Schwingungssensoren überwacht, können Schäden erkannt werden, da auch verschleiß- und schadensbedingte Verformungen der Getriebekomponenten zu einer Veränderung von erfassten Schwingungssignalen führen. Dazu werden die erfassten Schwingungssignale beispielsweise hinsichtlich signifikanter Punkte analysiert und mit Referenzwerten verglichen. Dabei können schadensbedingte Abweichungen in Form von Peaks oder Flanken in dem Schwingungssignal vorliegen. Es können auch Peaks oder Flanken in dem Signal schadensbedingt verschoben sein.

Durch die erfindungsgemäße Berücksichtigung des auf das Getriebe einwirkenden Drehmomentes bei der Analyse der Signale wird ermöglicht, rein betriebsbedingte Änderungen der Schwingungssignale von schadensbedingten Änderungen zu trennen. Die erfassten Schwingungssignale können hierzu beispielsweise auf das erfindungsgemäß ermittelte Drehmoment normiert werden, wobei unterschiedliche bekannte mathematische oder funktionsabhängige Methoden Anwendung finden können. So wird auf einfachem Wege eine zuverlässige Schadenserkennung bzw. -vorhersage und damit ein wirtschaftlicher Betrieb der das Getriebe umfassenden Anlage gewährleistet.

In einer Ausführungsform der vorliegenden Erfindung kann vorgesehen sein, dass ein zu einem Zahneingriff eines weiteren Paares von Zahnrädern korrespondierendes Schwingungssignal erfasst wird. Das Schwingungssignal wird dann mit einem Kalibrier-Schwingungssignal verglichen, und aus der Differenz der Abweichungen der beiden Schwingungssignale von den jeweiligen Kalibrier-Schwingungssignalen wird das auf das Getriebe einwirkende Drehmoment ermittelt. Im Anschluss wird das Drehmoment bei der Auswertung des Schwingungssignals hinsichtlich möglicher Schäden berücksichtigt.

Dabei ist es möglich Schwingungssignale zu erfassen, die zu zwei Paaren von im Eingriff stehenden Zahnrädern korrespondieren, die an axial beabstandeten Stellen an einer Welle vorgesehen sind. So kann zur Bestimmung des Drehmomentes auch die lastabhängige Verformung der Welle berücksichtigt werden. Unter Last können sowohl die Zähne der Zahnradpaare, als auch der zwischen den beiden Zahnradpaaren befindliche Abschnitt der Welle Verformungen unterliegen. Eine Bestimmung der Differenz der Abweichungen der beiden zu den Zahneingriffen korrespondierenden Schwingungssignale von den jeweiligen Kalibrier-Schwingungssignalen umfasst dann auch die lastbedingte Verformung der Welle. Zu den beiden Paaren von Zahnrädern können dabei individuelle Schwingungssignale oder aber unterschiedliche Schwingungssignalkomponenten eines Signals korrespondieren.

In vorteilhafter Ausgestaltung kann als Kalibrier-Schwingungssignal ein Schwingungssignal verwendet werden, welches zu den Schwingungen korrespondiert, die durch die Abwälz- und Stoßbewegung bei einem unter bekannter Last und Drehzahl erfolgenden Zahneingriff des wenigstens einen Paares von Zahnrädern verursacht werden. Um die durch das anliegende Drehmoment bedingte Veränderung des erfassten Schwingungssignals ermitteln zu können, muss das Signal im Allgemeinen mit einer geeigneten Referenz verglichen werden. Diese kann erstellt werden, indem unter bekannter Last und Drehzahl ein Schwingungssignal aufgenommen wird, welches dem Zahneingriff zugeordnet ist. Es kann auch im Rahmen einer Kalibriermessung eine Übertragungsfunktion bestimmt werden, mittels derer einer diskreten Abweichung des Schwingungssignals ein diskreter Drehmomentwert zugeordnet wird. Eine Kalibrierung muss im Allgemeinen für jeden Getriebetyp erfolgen. Dabei können bekannte Verfahren verwendet werden, wie sie beispielsweise an einem Getriebeprüfstand Anwendung finden.

In einem weiteren Ausführungsbeispiel der Erfindung ist vorgesehen, dass Schwingungssignale erfasst werden, die zu mehreren an unterschiedlichen Stellen im Getriebe angeordneten Zahneingriffen korrespondieren, der Mittelwert der Abweichungen der Schwingungssignale von den Kalibrier-Schwingungssignalen gebildet wird, und aus dem Mittelwert das Drehmoment ermittelt wird. Durch die Mittelwertbildung kann dabei in bekannter Weise ein zuverlässigerer Messwert ermittelt werden.

Gemäß einer bevorzugten Ausführungsform der Erfindung ist vorgesehen, dass aus dem Schwingungssignal die Dauer des Zahneingriffs des wenigstens eines Paares von miteinander in Eingriff stehenden Zahnrädern ermittelt, undaus der Abweichung des Verlaufes der Zahneingriffsdauer von einer Zahneingriffsdauer unter bekannter Last und Drehzahl das Drehmoment ermittelt wird. Dabei kann insbesondere vorgesehen sein, dass als Zahneingriffsdauer die Dauer des Zahneingriffs zwischen dem Punkt des Eingriffsbeginns A und dem Punkt des Eingriffsendes E, und/oder die Dauer des Zahneingriffs zwischen dem Startpunkt B des Einzeleingriffsgebietes und dem Endpunkt D des Einzeleingriffsgebietes zwischen zwei Zähnen ermittelt wird.

Erfindungsgemäß wird das erfasste Schwingungssignal hinsichtlich der Dauer des Zahneingriffs analysiert, wobei signifikanten Punkte des Zahneingriffs beispielsweise in Form von Peaks oder Flanken in dem Schwingungssignal identifiziert werden können. Lastbedingt erfolgt eine charakteristische Veränderung der Zahneingriffsdauer. Die Gesamteingriffsdauer, also die Dauer zwischen dem Punkt des Eingriffsbeginns A und dem Punkt des Eingriffsendes E nimmt mit steigender Last zu, während die Dauer des Zahneingriffs zwischen dem Startpunkt B und dem Endpunkt D des Einzeleingriffsgebietes mit steigender Last abnimmt. Dieses charakteristische Verhalten kann aus den mittels Schwingungssensoren erfassten Schwingungssignalen entnommen werden und erfindungsgemäß zur Bestimmung des Drehmoments herangezogen werden.

Eine weitere Ausführungsform der vorliegenden Erfindung zeichnet sich dadurch aus, dass eine kontinuierliche Überwachung und Speicherung der erfassten Drehmomentwerte erfolgt und ein Alarmsignal ausgegeben wird, wenn einer der erfassten Drehmomentwerte außerhalb eines vorgegebenen zulässigen Drehmomentwert-Bereichs liegt. Dabei werden die Drehmomentwerte vorteilhafter Weise ortsaufgelöst erfasst und gespeichert und die Meldung umfasst die Angabe des unzulässigen Drehmomentwertes sowie eine Ortsangabe, an welcher Stelle im Getriebe der Drehmomentwert erfasst wurde. Auf diese Weise wird gewährleistet, dass bei Vorliegen einer hohen Abweichung des Drehmoments eine Meldung erfolgt und es ist sichergestellt, dass die Stelle im Getriebe, an welcher dieser hohe Wert erfasst wurde, identifiziert werden kann. Es können auch einzelne Drehmomentwerte mit einem über verschiedene Getriebestellen gebildeten Mittelwert verglichen werden, um eine lokale Abweichung von dem mittleren Wert zu identifizieren.

Gemäß einer bevorzugten Ausführungsform der Erfindung ist vorgesehen, dass das wenigstens eine Schwingungssignal fouriertransformiert wird. Über die Fouriertransformation kann beispielsweise ein zeitabhängiges Schwingungssignal in den Frequenzraum transformiert werden und es kann eine frequenzabhängige Analyse des Signals erfolgen. In der frequenzabhängigen Darstellung können dann charakteristische Signalverläufe wie etwa Peaks bei diskreten Frequenzwerten gefunden und mit betriebsbedingten Werten, wie beispielsweise der Zahneingriffsgrundfrequenz korreliert werden. Diese ergibt sich aus der Drehzahl und der Anzahl der Zähne des Zahnrades.

Wird das Schwingungssignal im Frequenzraum dargestellt, so kann aus dem Schwingungssignal ein in einem vorgegebenen Frequenzbereich liegende Teil, insbesondere derjenige Teil, der sich um ein vorgegebenes Frequenzintervall und die Zahneingriffsgrundfrequenz erstreckt, gefiltert werden. So kann der für die Analyse benötigte Frequenzbereich isoliert werden, um beispielsweise nur die für die Drehmomentbestimmung relevanten Komponenten des Signals zu berücksichtigen.

Eine weitere Ausführungsform zeichnet sich dadurch aus, dass die Zahneingriffsgrundfrequenz mit Hilfe eines Drehzahlmessers ermittelt wird. Aus der aktuellen Drehzahl kann dabei zusammen mit der bekannten Anzahl der Zähne des Zahnrades die Zahneingriffsgrundfrequenz berechnet werden.

Das Schwingungssignal kann mittels Körperschall-Schwingungsaufnehmern und/oder Luftschall-Schwingungsaufnehmern erfasst werden. Dabei kann insbesondere vorgesehen sein, dass das Schwingungssignal mittels Schwingungssensoren eines Condition-Monitoring-Systems erfasst wird. Die Verwendung der bestehenden Schwingungssensoren eines Zustandsüberwachungssystems ist besonders vorteilhaft, da keine zusätzlichen Bauteile an dem Getriebe bzw. der das Getriebe umfassenden Anlage installiert werden müssen, um das erfindungsgemäße Verfahren anzuwenden.

In vorteilhafter Ausgestaltung kann die Temperatur des Getriebes und/oder der das Getriebe umfassenden Vorrichtung überwacht und in die Auswertung des Schwingungssignals hinsichtlich möglicher Schäden mit einbezogen werden. Ferner kann der Zustand des Getriebeöls, insbesondere die Viskosität und/oder die Reinheit und/oder die Feuchte und/oder weitere Kennwerte des Getriebeöls überwacht und in die Auswertung des Schwingungssignals hinsichtlich möglicher Schäden mit einbezogen werden. Die Erfassung weiterer betriebsbedingter Parameter und deren Berücksichtigung der Analyse der Schwingungssignale ermöglicht es, betriebsbedingte von schadensbedingten Veränderungen zu trennen. Werden zahlreiche Betriebsparameter erfasst, können über bekannte mathematische Methoden insbesondere Multi-Parameter-Zusammenhänge erstellt werden und es wird eine zuverlässige Schadenserkennung bzw. - vorhersage ermöglicht.

Schließlich betrifft ein weiterer Gegenstand der vorliegenden Erfindung eine Vorrichtung zur Schadenserkennung bei gezahnten Getriebestufen, die wenigstens einen Schwingungssensor und eine Steuervorrichtung umfasst, wobei der Schwingungssensor ausgebildet ist, um ein Schwingungssignal zu erfassen, welches zu den Schwingungen korrespondiert, die durch die Abwälz- und Stoßbewegungen bei einem unter Last erfolgenden Zahneingriff des wenigstens einen Paares von Zahnrädern verursacht werden und die Steuervorrichtung ausgebildet ist, um unter Verwendung des erfindungsgemäßen Verfahrens Schäden an der verzahnten Getriebestufe zu erkennen.

Hinsichtlich weiterer vorteilhafter Ausgestaltungen und Weiterbildungen der Erfindung wird auf die Unteransprüche sowie die nachfolgende Beschreibung eines Ausführungsbeispiels unter Bezugnahme auf die Zeichnung verwiesen. In der Zeichnung zeigt:
- Figur 1: eine schematische Ansicht eines Getriebes,
- Figur 2: eine schematische Darstellung eines Paares von im Eingriff befindlichen Zahnrädern, und
- Figur 3: ein Diagramm, in dem für verschiedene anliegende Drehmomente die Pressungen der Zahnflanken über die Eingriffsstrecke aufgetragen ist.

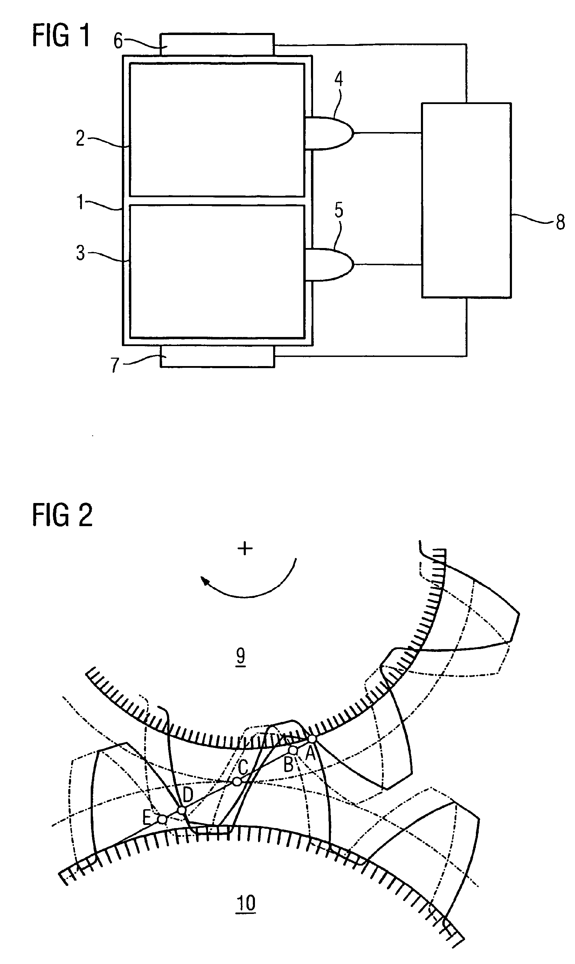

Die Figur 1 zeigt in schematischer Darstellung ein Getriebe 1, wie es beispielsweise in Windkraftanlagen Verwendung findet, um die Drehbewegung des Rotors in eine Rotation der Antriebswelle eines Generators umzusetzen. Das Getriebe 1 umfasst zwei verzahnte Getriebestufen 2, 3, denen jeweils ein Schwingungssensor 4, 5 und ein Drehzahlmesser 6, 7 zugeordnet ist. In dem konkret gezeigten Ausführungsbeispiel handelt es sich bei den Schwingungssensoren um Körperschall-Schwingungsaufnehmer 4, 5. Es können jedoch auch andere Sensoren, wie etwa Luftschall-Schwingungsaufnehmer verwendet werden. Die Körperschall-Schwingungsaufnehmer 4, 5 sind hier integraler Bestandteil eines nicht dargestellten Zustandsüberwachungssystems, mit welchem das Getriebe 1 überwacht wird. Von dem Zustandsüberwachungssystem ist hier nur die zentrale Steuervorrichtung 8 gezeigt, mit welcher die Körperschall-Schwingungsaufnehmer 4, 5 und die Drehzahlmesser 6, 7 verbunden sind.

Im Betrieb werden die durch die im Eingriff befindlichen Zähne des Zahnradpaares der ersten Getriebestufe 2 erzeugten akustischen Schwingungen mittels des zugehörigen Körperschall-Schwingungsaufnehmers 4 aufgenommen. Bei Anliegen einer Last verformen sich die Zähne des Zahnradpaares, wobei das Ausmaß der Verformung von der Zahnsteifigkeit und dem anliegenden Drehmoment abhängt. In Folge dessen verändert sich der Verlauf des Zahneingriffs, was detektiert wird. Dazu wird mittels des Körperschall-Schwingungsaufnehmers 4 ein akustisches Schwingungssignal erfasst, welches zu den Schwingungen korrespondiert, die durch die Abwälz- und Stoßbewegung bei dem unter Last erfolgenden Zahneingriff des Zahnradpaares verursacht werden. Das erfasste Schwingungssignal wird dann mit einem Kalibrier-Schwingungssignal verglichen, und aus der Abweichung des Schwingungssignals von dem Kalibrier-Schwingungssignal wird das auf das Getriebe 1 einwirkende Drehmoment bestimmt. Das auf diese Weise ermittelte Drehmoment wird erfindungsgemäß bei der Auswertung des Schwingungssignals hinsichtlich möglicher Schäden berücksichtigt.

Konkret wird aus dem Schwingungssignal die Dauer des Zahneingriffs eines Paares von miteinander in Eingriff stehenden Zahnrädern 9, 10 ermittelt und aus der Abweichung des Verlaufes der Zahneingriffsdauer von einer Zahneingriffsdauer unter bekannter Last und Drehzahl das Drehmoment bestimmt. Dabei wird als Zahneingriffsdauer die Dauer des Zahneingriffs zwischen dem Punkt des Eingriffsbeginns A und dem Punkt des Eingriffsendes E, und/oder die Dauer des Zahneingriffs zwischen dem Startpunkt B des Einzeleingriffsgebietes und dem Endpunkt D des Einzeleingriffsgebietes zwischen zwei Zähnen ermittelt. Zur Veranschaulichung des Verlaufs des Zahneingriffs und der genannten charakteristischen Punkte desselben wird auf die Figur 2 verwiesen, in welcher schematisch ein Paar von im Eingriff befindlichen Zahnrädern 9, 10 dargestellt ist. Die charakteristischen Punkte A-E des Zahneingriffs sind ebenfalls eingezeichnet.

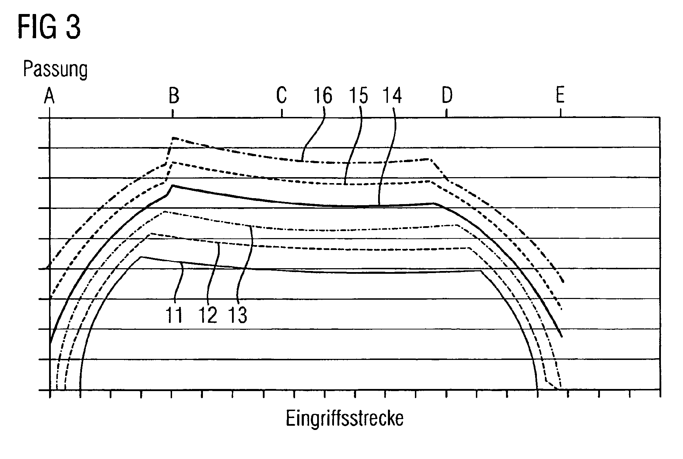

Die signifikanten Punkte des Zahneingriffs können beispielsweise in Form von Peaks oder Flanken in dem Schwingungssignal identifiziert werden. Infolge der anliegenden Last wird die Zahneingriffsdauer in charakteristischer Weise verändert. Die Gesamteingriffsdauer, also die Dauer zwischen dem Punkt des Eingriffsbeginns A und dem Punkt des Eingriffsendes E nimmt mit steigender Last zu, während die Dauer des Zahneingriffs zwischen dem Startpunkt B und dem Endpunkt D des Eingriffsgebiets mit steigender Last abnimmt. Dieses Verhalten wird durch Figur 3 verdeutlicht, in welcher die Pressung der Zahnflanken über die Eingriffsstrecke für unterschiedliche Belastungen dargestellt ist. Der Figur 3 kann das lastabhängige Wandern der Zahneingriffsstöße entlang der Eingriffsstrecke entnommen werden. Es sind insgesamt sechs Kurven 11-16 dargestellt, die zu sechs Drehmomentwerten korrespondieren. Dabei zeigt die unterste Kurve 11 die Pressung über der Eingriffsstrecke für die unter geringster Last und die oberste Kurve 16 die Pressung über der Eingriffsstrecke für die höchste Last. Für die dazwischen liegenden Kurven 12-15 steigt die anliegende Last stetig von unten nach oben an. Aus dem Vergleich der Kurven geht hervor, dass mit steigender Last die Gesamteingriffsdauer zunimmt, während die Dauer zwischen dem Startpunkt B und dem Endpunkt D des Einzeleingriffsgebietes mit steigender Last abnimmt. Diese Veränderung wird über das mittels Körperschall-Schwingungsaufnehmer 4 erfasste Schwingungssignal detektiert und erfindungsgemäß zur Bestimmung des Drehmomentes herangezogen.

Da verschleiß- und schadensbedingte Verformungen der Getriebekomponenten ebenfalls zu einer Veränderung des erfassten Schwingungssignals führen, können über die Auswertung des Schwingungssignals an dem Getriebe 1 vorliegende Schäden erkannt werden. Dazu wird das Schwingungssignal hinsichtlich signifikanter Punkte analysiert und mit Referenzwerten verglichen, um mögliche Schäden zu identifizieren. Schadensbedingte Abweichungen können in Form von Peaks oder Flanken in dem Schwingungssignal vorliegen, oder aber es können Peaks oder Flanken in dem Signal schadensbedingt verschoben sein. Die erfindungsgemäße Berücksichtigung des auf das Getriebe 1 einwirkenden Drehmomentes im Rahmen der Analyse des Signals zur Schadenserkennung ermöglicht dabei rein betriebsbedingte Änderungen des Schwingungssignals von schadensbedingten Änderungen zu trennen. Das Schwingungssignal wird auf das erfindungsgemäße Drehmoment beispielsweise normiert, wobei bekannte mathematische oder funktionsabhängige Methoden Anwendung finden. So wird auf einfachem Wege eine zuverlässige Schadenserkennung bzw. - vorhersage und damit ein wirtschaftlicher Betrieb der das Getriebe 1 umfassenden Anlage gewährleistet.

Darüber hinaus wird im Betrieb mittels des weiteren Körperschall-Schwingungsaufnehmers 5 ein zu dem Zahneingriff eines Paares von Zahnrädern 9, 10 der zweiten Getriebestufe 3 korrespondierendes Schwingungssignal erfasst und das Schwingungssignal wird mit einem Kalibrier-Schwingungssignal verglichen. Aus der Differenz der Abweichung der beiden Schwingungssignale von den jeweiligen Kalibrier-Schwingungssignalen wird das auf das Getriebe 1 einwirkende Drehmoment ermittelt. Die nicht dargestellte Welle zwischen den Zahnrädern 9, 10 der ersten und zweiten Getriebestufe wird bei Anliegen einer Last ebenfalls verformt, und über die Erfassung der zu den Zahnradpaaren korrespondierenden Schwingungssignale kann zur Bestimmung des Drehmomentes auch diese Verformung der Welle berücksichtigt werden. Alternativ zu der Verwendung von zwei unabhängigen Körperschall-Schwingungsaufnehmern 4, 5 kann auch nur an einer Stelle des Getriebes ein Körperschall-Schwingungsaufnehmer 4, 5 vorgesehen sein, der ein Schwingungssignal erfasst, wobei zu den beiden Paaren von Zahnrädern 9, 10 dann unterschiedliche Schwingungssignalkomponenten korrespondieren.

Als Kalibrier-Schwingungssignal wird ein Schwingungssignal verwendet, welches zu den Schwingungen korrespondiert, die durch die Abwälz- und Stoßbewegung bei einem unter bekannter Last und Drehzahl erfolgenden Zahneingriff des jeweiligen Zahnradpaares verursacht werden. Um die durch ein anliegendes Drehmoment bedingte Veränderung des erfassten Schwingungssignals ermitteln zu können muss das Schwingungssignal mit einer Referenz verglichen werden. Eine solche Referenz wird beispielsweise erstellt, indem unter bekannter Last und Drehzahl ein Schwingungssignal aufgenommen wird, welches dem Zahneingriff zugeordnet ist. Es kann auch eine Übertragungsfunktion im Rahmen einer Kalibriermessung bestimmt werden, mittels derer einer diskreten Abweichung des Schwingungssignals ein diskreter Drehmoment zugeordnet wird.

Darüber hinaus können an weiteren Stellen im Getriebe 1 mittels nicht in der Zeichnung dargestellter Körperschall-Schwingungsaufnehmer 4, 5 Schwingungssignale erfasst werden, die zu weiteren an unterschiedlichen Stellen im Getriebe 1 angeordneten Zahneingriffen korrespondieren. Dann wird der Mittelwert der Abweichung der Schwingungssignale von den Kalibrier-Schwingungssignalen gebildet und aus dem Mittelwert das Drehmoment ermittelt.

Während des Betriebs erfolgt eine kontinuierliche Überwachung und Speicherung der erfindungsgemäß ermittelten Drehmomentwerte in der zentralen Steuerungsvorrichtung 8 und es wird ein Alarmsignal ausgegeben, wenn einer der erfassten Werte außerhalb eines vorgegebenen zulässigen Drehmomentwert-Bereiches liegt. Die Drehmomentwerte werden dabei ortsaufgelöst erfasst und gespeichert und die Meldung umfasst die Angabe des unzulässigen Drehmomentwertes sowie die Ortsangabe, an welcher Stelle im Getriebe 1 dieser erfasst wurde. Dabei können auch einzelne Drehmomentwerte mit einem über verschiedene Getriebestellen gebildeten Mittelwert verglichen werden, um eine lokale Abweichung von dem mittleren Wert zu identifizieren und dies mittels Alarmsignal zu melden.

Im Rahmen der Analyse kann auch eine Fouriertransformation des erfassten Schwingungssignals erfolgen. So kann ein beispielsweise zeitabhängiges Schwingungssignal in den Frequenzraum transformiert werden und es kann eine frequenzabhängige Analyse des Signals erfolgen. In der frequenzabhängigen Darstellung werden dann beispielsweise charakteristische Signalverläufe wie etwa Peaks bei diskreten Frequenzwerten gefunden und mit betriebsbedingten Parametern wie etwa der Zahneingriffsgrundfrequenz korreliert.

Ist das Schwingungssignal im Frequenzraum dargestellt, so kann aus diesem ein in einem vorgegebenen Frequenzbereich liegender Teil, insbesondere derjenige Teil, der sich um ein vorgegebenes Frequenzintervall um die Zahneingriffsgrundfrequenz erstreckt, gefiltert werden. Im Rahmen der Analyse kann es von Vorteil sein, auf diese Weise einen benötigten Frequenzbereich zu isolieren, um beispielsweise nur die für die Drehmomentbestimmung relevanten Komponenten des Signals berücksichtigen zu können.

Die Zahneingriffsgrundfrequenz wird dabei mit Hilfe der Drehzahlmesser 6, 7 ermittelt, wobei sie jeweils aus der Drehzahl und der bekannten Anzahl der Zähne des Zahnrades 9, 10 berechnet wird.

Des Weiteren werden die Temperatur des Getriebes 1 und der das Getriebe 1 umfassenden Vorrichtung mittels nicht dargestellter Temperatursensoren überwacht und in die Auswertung des Schwingungssignals hinsichtlich möglicher Schäden mit einbezogen. Auch der Zustand des Getriebeöls, insbesondere die Viskosität, die Reinheit, die Feuchte und weitere Kennwerte des Getriebeöls werden überwacht und mit in die Auswertung eingebunden. Dabei ermöglicht die Erfassung dieser weiteren betriebsbedingten Parameter und deren Berücksichtigung bei der Analyse der Schwingungssignale die Trennung von betriebs- und schadensbedingten Veränderungen.

Durch die Erfassung dieser Vielzahl von Betriebsparametern, insbesondere die Berücksichtigung des erfindungsgemäß bestimmten Drehmomentes können über bekannte mathematische Methoden Multi-Parameter-Zusammenhänge erstellt werden und es wird eine zuverlässige Schadenserkennung bzw. -vorhersage ermöglicht.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Schadenserkennung bei verzahnten Getriebestufen (2, 3) mit wenigstens einem Paar von miteinander in Eingriff stehenden Zahnrädern (9, 10), bei dem durch wenigstens einen Schwingungssensor (4, 5) Schwingungssignale erfasst werden, die zu den im Betrieb der Getriebestufe (2, 3) auftretenden Schwingungen korrespondieren, und die erfassten Schwingungssignale analysiert werden, um mögliche Schäden zu erkennen, **dadurch gekennzeichnet, dass**
- mittels des Schwingungssensors (4, 5) ein Schwingungssignal erfasst wird, welches zu den Schwingungen korrespondiert, die durch die Abwälz- und Stoßbewegung bei einem unter Last erfolgenden Zahneingriff des wenigstens einen Paares von Zahnrädern (9, 10) verursacht werden,
- das Schwingungssignal mit einem Kalibrier-Schwingungssignal verglichen wird,
- aus der Abweichung des Schwingungssignals von dem Kalibrier-Schwingungssignal das auf das Getriebe (1) einwirkende Drehmoment ermittelt wird, und
- das ermittelte Drehmoment bei der Auswertung des Schwingungssignals hinsichtlich möglicher Schäden berücksichtigt wird.

2. Verfahren nach Anspruch 1, **dadurch gekennzeichnet, dass**
- ein zu einem Zahneingriff eines weiteren Paares von Zahnrädern (9, 10) korrespondierendes Schwingungssignal erfasst wird,
- das Schwingungssignal mit einem Kalibrier-Schwingungssignal verglichen wird,
- aus der Differenz der Abweichungen der beiden Schwingungssignale von den jeweiligen Kalibrier-Schwingungssignalen das auf das Getriebe (1) einwirkende Drehmoment ermittelt wird.

3. Verfahren nach Anspruch 1 oder 2,
**dadurch gekennzeichnet, dass**
als Kalibrier-Schwingungssignal ein Schwingungssignal verwendet wird, welches zu den Schwingungen korrespondiert, die durch die Abwälz- und Stoßbewegungen bei einem unter bekannter Last und Drehzahl erfolgenden Zahneingriff des wenigstens einen Paares von Zahnrädern (9, 10) verursacht werden.

4. Verfahren nach einem der vorhergehenden Ansprüche,
**dadurch gekennzeichnet, dass**
- Schwingungssignale erfasst werden, die zu mehreren an unterschiedlichen Stellen im Getriebe (1) angeordneten Zahneingriffen korrespondieren,
- der Mittelwert der Abweichungen der Schwingungssignale von den Kalibrier-Schwingungssignalen gebildet wird, und
- aus dem Mittelwert das Drehmoment ermittelt wird.

5. Verfahren nach einem der vorhergehenden Ansprüche,
**dadurch gekennzeichnet, dass**
- aus dem Schwingungssignal die Dauer des Zahneingriffs des wenigstens eines Paares von miteinander in Eingriff stehenden Zahnrädern (9, 10) ermittelt wird, und
- aus der Abweichung des Verlaufes der Zahneingriffsdauer von einer Zahneingriffsdauer unter bekannter Last und Drehzahl das Drehmoment ermittelt wird.

6. Verfahren nach Anspruch 5,
**dadurch gekennzeichnet, dass**
als Zahneingriffsdauer die Dauer des Zahneingriffs zwischen dem Punkt des Eingriffsbeginns A und dem Punkt des Eingriffsendes E, und/oder die Dauer des Zahneingriffs zwischen dem Startpunkt B des Einzeleingriffsgebietes und dem Endpunkt D des Einzeleingriffsgebietes zwischen zwei Zähnen ermittelt wird.

7. Verfahren nach einem der vorhergehenden Ansprüche,
**dadurch gekennzeichnet, dass**
eine kontinuierliche Überwachung und Speicherung der erfassten Drehmomentwerte erfolgt und ein Alarmsignal ausgegeben wird, wenn einer der erfassten Drehmomentwerte außerhalb eines vorgegebenen zulässigen Drehmomentwert-Bereiches liegt.

8. Verfahren nach Anspruch 7,
**dadurch gekennzeichnet, dass**
die Drehmomentwerte ortsaufgelöst erfasst und gespeichert werden und die Meldung die Angabe des unzulässigen Drehmomentwertes sowie eine Ortsangabe umfasst, an welcher Stelle im Getriebe (1) der Drehmomentwert erfasst wurde.

9. Verfahren nach einem der vorhergehenden Ansprüche,
**dadurch gekennzeichnet, dass**
das wenigstens eine Schwingungssignal fouriertransformiert wird.

10. Verfahren nach einem der vorhergehenden Ansprüche, **dadurch gekennzeichnet, dass**
- das Schwingungssignal im Frequenzraum dargestellt wird, und
- aus dem Schwingungssignal ein in einem vorgegebenen Frequenzbereich liegender Teil, insbesondere derjenige Teil, der sich um ein vorgegebenes Frequenzintervall um die Zahneingriffsgrundfrequenz erstreckt, gefiltert wird.

11. Verfahren nach einem der vorhergehenden Ansprüche,
**dadurch gekennzeichnet, dass**
die Zahneingriffsgrundfrequenz mit Hilfe eines Drehzahlmessers (6, 7) ermittelt wird.

12. Verfahren nach einem der vorhergehenden Ansprüche,
**dadurch gekennzeichnet, dass**
das Schwingungssignal mittels Körperschall-Schwingungsaufnehmern (4, 5) aufgenommen wird.

13. Verfahren nach einem der vorhergehenden Ansprüche,
**dadurch gekennzeichnet, dass**
das Schwingungssignal mittels Luftschall-Schwingungsaufnehmern (4, 5) erfasst wird.

14. Verfahren nach einem der vorhergehenden Ansprüche,
**dadurch gekennzeichnet, dass**
das Schwingungssignal mittels Schwingungssensoren (4, 5) eines Condition-Monitoring- Systems erfasst wird.

15. Verfahren nach einem der vorhergehenden Ansprüche,
**dadurch gekennzeichnet, dass**
die Temperatur des Getriebes (1) und/oder der das Getriebe (1) umfassenden Vorrichtung überwacht und in die Auswertung des Schwingungssignales hinsichtlich möglicher Schäden mit einbezogen wird.

16. Verfahren nach einem der vorhergehenden Ansprüche,
**dadurch gekennzeichnet, dass**
der Zustand des Getriebeöls, insbesondere die Viskosität und/oder die Reinheit und/oder die Feuchte und/oder weitere Kennwerte des Getriebeöls überwacht und in die Auswertung des Schwingungssignales hinsichtlich möglicher Schäden mit einbezogen werden.

17. Vorrichtung zur Schadenserkennung bei verzahnten Getriebestufen (2, 3), die wenigstens einen Schwingungssensor (4, 5) und eine Steuervorrichtung (8) umfasst, wobei der Schwingungssensor (4, 5) ausgebildet ist, um ein Schwingungssignal zu erfassen, welches zu den Schwingungen korrespondiert, die durch die Abwälz- und Stoßbewegung bei einem unter Last erfolgenden Zahneingriff des wenigstens einen Paares von Zahnrädern (9, 10) verursacht werden und die Steuervorrichtung (8) ausgebildet ist, um unter Verwendung des Verfahrens nach einem der vorhergehenden Ansprüche Schäden an der verzahnten Getriebestufe (2, 3) zu erkennen.

## Claims

1. Method for identifying damage in toothed transmission stages (2, 3) with at least one pair of meshing toothed wheels (9, 10), wherein oscillation signals corresponding to the oscillations occurring during operation of the transmission stage (2, 3) are detected by at least one oscillation sensor (4, 5) and the detected oscillation signals are analyzed to identify possible damage, **characterised in that**
- the oscillation sensor (4, 5) detects an oscillation signal, which corresponds to the oscillations produced by the hobbing and impact movement when the teeth of the at least one pair of toothed wheels (9, 10) mesh under load,
- the oscillation signal is compared with a calibration oscillation signal,
- the torque acting on the transmission (1) is determined from the deviation of the oscillation signal from the calibration oscillation signal and
- the determined torque is taken into account when evaluating the oscillation signal in respect of possible damage.

2. Method according to claim 1, **characterised in that**
- an oscillation signal corresponding to a tooth meshing of a further pair of toothed wheels (9, 10) is detected,
- the oscillation signal is compared with a calibration oscillation signal,
- the torque acting on the transmission (1) is determined from the difference between the deviations of the two oscillation signals from the respective calibration oscillation signals.

3. Method according to claim 1 or 2,
**characterised in that**
an oscillation signal, which corresponds to the oscillations produced by the hobbing and impact movement when the teeth of the at least one pair of toothed wheels (9, 10) mesh under known load and at known speed, is used as a calibration oscillation signal.

4. Method according to one of the preceding claims,
**characterised in that**
- oscillation signals are detected, which correspond to a number of tooth meshings at different points in the transmission (1),
- the mean value of the deviations of the oscillation signals from the calibration oscillation signals is formed and
- the torque is determined from the mean value.

5. Method according to one of the preceding claims,
**characterised in that**
- the duration of the tooth meshing of the at least one pair of meshing toothed wheels (9, 10) is determined from the oscillation signal and
- the torque is determined from the deviation of the pattern of the tooth meshing duration from a tooth meshing duration under known load and at known speed.

6. Method according to claim 5,
**characterised in that**
the duration of the tooth meshing between the starting point of meshing A and the end point of meshing E and/or the duration of the tooth meshing between the starting point B of the individual meshing region and the end point D of the individual meshing region between two teeth is determined as the tooth meshing duration.

7. Method according to one of the preceding claims,
**characterised in that**
continuous monitoring and storage of the detected torque values takes place and an alarm signal is output if one of the detected torque values lies outside a predetermined permissible torque value range.

8. Method according to claim 7,
**characterised in that**
the torque values are detected and stored with spatial resolution and the notification includes details of the non-permissible torque value and details of the site where the torque value was detected in the transmission (1).

9. Method according to one of the preceding claims,
**characterised in that**
the at least one oscillation signal is Fourier transformed.

10. Method according to one of the preceding claims, **characterised in that**
- the oscillation signal is represented in the frequency domain and
- a component that is present in a predetermined frequency range, in particular the component that extends around a predetermined frequency interval around the basic tooth meshing frequency is filtered out of the oscillation signal.

11. Method according to one of the preceding claims,
**characterised in that**
the basic tooth meshing frequency is determined with the aid of a revolution counter (6, 7).

12. Method according to one of the preceding claims,
**characterised in that**
the oscillation signal is recorded by means of structure-borne sound oscillation recorders (4, 5).

13. Method according to one of the preceding claims,
**characterised in that**
the oscillation signal is detected by means of air-borne sound oscillation recorders (4, 5).

14. Method according to one of the preceding claims,
**characterised in that**
the oscillation signal is detected by means of oscillation sensors (4, 5) of a condition monitoring system.

15. Method according to one of the preceding claims,
**characterised in that**
the temperature of the transmission (1) and/or of the apparatus comprising the transmission (1) is monitored and also included in the evaluation of the oscillation signal in respect of possible damage.

16. Method according to one of the preceding claims,
**characterised in that**
the condition of the transmission oil, in particular the viscosity and/or the purity and/or the moisture content and/or further characteristic values of the transmission oil are monitored and also included in the evaluation of the oscillation signal in respect of possible damage.

17. Apparatus for identifying damage in toothed transmission stages (2, 3), which comprises at least one oscillation sensor (4, 5) and a control apparatus (8), the oscillation sensor (4, 5) being configured to detect an oscillation signal which corresponds to the oscillations produced by the hobbing and impact movement when the teeth of the at least one pair of toothed wheels (9, 10) mesh under load and the control apparatus (8) being configured to identify damage to the toothed transmission stage (2, 3) using the method according to one of the preceding claims.

## Revendications

1. Procédé pour déceler des endommagements dans des étages ( 2, 3 ) d'engrenage dentés ayant au moins une paire de roues ( 9, 10 ) dentées engrenant l'une dans l'autre, dans lequel on détecte par au moins un capteur ( 4, 5 ) d'oscillation des signaux d'oscillation qui correspondent à des oscillations se produisant lorsque l'étage ( 2, 3 ) d'engrenage est en fonctionnement et on analyse les signaux d'oscillation détectés pour déceler des endommagements éventuels, **caractérisé en ce que**
- on détecte au moyen du capteur ( 4, 5 ) d'oscillation, un signal d'oscillation qui correspond aux oscillations qui sont provoquées par des mouvements de roulement et de choc lors d'un engrènement s'effectuant sous charge de la au moins une paire de roues ( 9, 10 ) dentées,
- on compare le signal d'oscillation à un signal d'oscillation d'étalonnage,
- on détermine, à partir de l'écart du signal d'oscillation au signal d'oscillation d'étalonnage, le couple de rotation s'appliquant à l'engrenage ( 1 ) et
- on prend le couple de rotation déterminé en compte dans l'exploitation du signal d'oscillation en ce qui concerne des endommagements éventuels.

2. Procédé suivant la revendication 1, **caractérisé en ce que**
- on détecte un signal d'oscillation correspondant à un engrènement d'une autre paire de roues ( 9, 10 ) dentées,
- on compare le signal d'oscillation à un signal d'oscillation d'étalonnage,
- on détermine, à partir de la différence des écarts entre les deux signaux d'oscillation et les deux signaux d'oscillation d'étalonnage respectifs, le couple de rotation s'appliquant à l'engrenage ( 1 ).

3. Procédé suivant la revendication 1 ou 2,
**caractérisé en ce que**
on utilise, comme signal d'oscillation d'étalonnage, un signal d'oscillation qui correspond aux oscillations qui sont provoquées par les mouvements de roulement et de choc lors d'un engrenage, s'effectuant sous une charge à une vitesse de rotation connue, de la au moins une paire de roues ( 9, 10 ) dentées.

4. Procédé suivant l'une des revendications précédentes, **caractérisé en ce que**
- on détecte des signaux d'oscillation, qui correspondent à des engrènements disposés en plusieurs points différents de l'engrenage ( 1 ),
- on forme la moyenne des écarts des signaux d'oscillation aux signaux d'oscillation d'étalonnage et
- on détermine le couple de rotation à partir de la moyenne.

5. Procédé suivant l'une des revendications précédentes, **caractérisé en ce que**
- on détermine, à partir du signal d'oscillation, la durée de l'engrènement de la au moins une paire de roues ( 9, 10 ) dentées engrenant l'une dans l'autre et
- on détermine le couple de rotation, à partir de l'écart entre la courbe de la durée d'engrènement et une durée d'engrènement sous une charge et une vitesse de rotation connues.

6. Procédé suivant la revendication 5,
**caractérisé en ce que**
l'on détermine, comme durée d'engrènement, la durée de l'engrènement entre le point du début A de l'engrènement et le point de la fin E de l'engrènement, et/ou la durée de l'engrènement entre le point B de début de la zone d'engrènement individuelle et le point D de fin de la zone d'engrènement individuelle entre deux dents.

7. Procédé suivant l'une des revendications précédentes,
**caractérisé en ce que**
l'on effectue un contrôle continu et une mise en mémoire des valeurs de couple de rotation détectées et on émet un signal d'alerte, si l'une des valeurs de couple de rotation détectée est en dehors d'une plage de valeur de couple de rotation admissible donnée à l'avance.

8. Procédé suivant la revendication 7,
**caractérisé en ce que**
on détecte les valeurs de couple de rotation avec une résolution spatiale et on les mémorise et le message comprend l'indication de la valeur du couple de rotation inadmissible, ainsi qu'une indication d'emplacement indiquant le point de l'engrenage ( 1 ) où la valeur du couple de rotation a été détectée.

9. Procédé suivant l'une des revendications précédentes,
**caractérisé en ce que**
au moins un signal d'oscillation est transformé en série de Fourier.

10. Procédé suivant l'une des revendications précédentes,
**caractérisé en ce que**
- on représente le signal d'oscillation dans l'espace fréquentiel et
- on filtre du signal d'oscillation, une partie se trouvant dans un domaine fréquentiel prescrit, notamment la partie qui s'étend autour d'un intervalle de fréquence prescrit autour de la fréquence de base de l'engrènement.

11. Procédé suivant l'une des revendications précédentes,
**caractérisé en ce que**
l'on détermine la fréquence de base d'engrènement à l'aide d'un dispositif ( 6, 7 ) de mesure d'une vitesse de rotation.

12. Procédé suivant l'une des revendications précédentes,
**caractérisé en ce que**
l'on enregistre le signal d'oscillation au moyen d'enregistreurs ( 4, 5 ) d'oscillation de bruit de corps.

13. Procédé suivant l'une des revendications précédentes,
**caractérisé en ce que**
l'on détecte le signal d'oscillation au moyen de capteurs ( 4, 5 ) d'oscillation à bruit aérien.

14. Procédé suivant l'une des revendications précédentes,
**caractérisé en ce que**
l'on détecte le signal d'oscillation au moyen de capteurs ( 4, 5 ) d'oscillation d'un système condition-monitoring.

15. Procédé suivant l'une des revendications précédentes,
**caractérisé en ce que**
l'on contrôle la température de l'engrenage ( 1 ) et/ou du dispositif comprenant l'engrenage ( 1 ) et on l'inclue dans l'exploitation du signal d'oscillation en ce qui concerne des endommagements éventuels.

16. Procédé suivant l'une des revendications précédentes,
**caractérisé en ce que**
l'on contrôle l'état de l'huile de l'engrenage, notamment la viscosité et/ou la pureté et/ou l'humidité et/ou d'autres caractéristiques de l'huile de l'engrenage et on l'incorpore dans l'exploitation du signal d'oscillation en ce qui concerne des endommagements éventuels.

17. Dispositif pour déceler des endommagements dans des étages ( 2, 3 ) d'engrenage dentés, qui comprend au moins un capteur ( 4, 5 ) d'oscillation et un dispositif ( 8 ) de commande, le capteur ( 4, 5 ) d'oscillation étant constitué pour détecter un signal d'oscillation qui correspond aux oscillations, qui sont provoquées par les mouvements de roulement et de choc lors d'un engrènement s'effectuant sous charge de la au moins une paire de roues ( 9, 10 ) dentées et le dispositif ( 8 ) de commande étant constitué pour déceler des endommagements de l'étage ( 2, 3 ) d'engrenage denté en utilisant le procédé suivant l'une des revendications précédentes.
